# EUROPÄISCHE PATENTSCHRIFT

(11) **EP 1 195 417 B1**
(45) Veröffentlichungstag und Bekanntmachung des Hinweises auf die Patenterteilung: **14.10.2009**
(21) Anmeldenummer: 01119989.0
(22) Anmeldetag: 18.08.2001
(51) Int. Cl.: C09C 1/30, C09C 3/12, C08K 9/06

(54) **Siliciumorganische Nanokapseln**
Silicone-organic nanocapsules
Nanocapsules organosiliciés

(30) Priorität: 05.10.2000 DE 10049628; 09.01.2001 DE 10100631
(43) Veröffentlichungstag der Anmeldung: 10.04.2002
(73) Patentinhaber: Evonik Degussa GmbH, 45128 Essen (DE)
(72) Erfinder: Edelmann, Roland, 79664 Wehr (DE); Monkiewicz, Jaroslaw, Dr., 79618 Rheinfelden (DE)

(56) Entgegenhaltungen:
- DE-A1- 19 846 660
- DATABASE WPI Section Ch, Week 199006 Derwent Publications Ltd., London, GB; Class A17, AN 1990-040924 XP002352466 & JP 01 318051 A (TORAY SILICONE CO LTD) 22. Dezember 1989 (1989-12-22)
- DATABASE WPI Section Ch, Week 198441 Derwent Publications Ltd., London, GB; Class A32, AN 1984-254541 XP002352467 & JP 59 155437 A (NIPPON KOGAKU KK) 4. September 1984 (1984-09-04)

## Beschreibung

Die vorliegende Erfindung betrifft siliciumorganische Nanokapseln, bestehend aus einem nanoskaligen Kern A, der mindestens ein Oxid oder Mischoxid mindestens eines Metalls oder Halbmetalls der zweiten bis sechsten Hauptgruppe, der ersten bis achten Nebengruppe des Periodensystems der Elemente oder der Lanthanide enthält, und einer im Wesentlichen vollständigen, siliciumorganischen Umhüllung B, wobei diese durch Umsetzen aus mindestens einer organofunktionellen Siliciumverbindung, die eine organofunktionelle Gruppe und mindestens eine hydrolysierbare Gruppe bzw. mindestens eine Hydroxygruppe aufweist, und nanoskaligen Partikeln A erhältlich sind.

Ferner betrifft die vorliegende Erfindung ein Verfahren zur Herstellung siliciumorganischer Nanokapseln, wobei diese direkt in einer Kunstharzzusammensetzung anfallen. Ebenfalls betrifft die vorliegende Erfindung die Verwendung solcher Zusammensetzungen als Lack für die Erzeugung einer kratzfesten Beschichtung auf einem Substrat sowie entsprechend kratzfest beschichtete Artikel.

Es ist bekannt, die Oberflächeneigenschaften von Sol- oder Gelpartikeln oder von Metall- bzw. Halbmetalloxiden durch eine Behandlung mit einem hydrolysierbaren Organosilan oder Organosiloxan zu modifizieren, wobei in der Regel eine nur einlagige Silanschicht an das Oxid- bzw. Solgelpartikel anbindet. So behandelte Oxide bzw. Sol- oder Gelpartikel, beispielsweise anorganische Pigmente oder Füllstoffe, können in eine Polymermatrix eingebracht werden, insbesondere in Folien sowie in Beschichtungsmittel und damit erzeugbare Beschichtungen. In der Regel ist jedoch die Kratzfestigkeit solcher Polymersysteme gering.

DE 198 46 660 offenbart nanoskalige, oberflächenmodifizierte Oxid- bzw. Mischoxidpartikel, die von kovalent an das Oxidpartikel gebundenen siliciumorganischen Gruppen umhüllt sind, wobei die organofunktionellen Gruppen als reaktive Gruppen beschrieben werden und üblicherweise nach außen orientiert sind, sodass sie durch Polymerisation mit dem Polymermaterial beim Aushärten des Präpolymers in die Polymermatrix eingebunden werden. Das Herstellungsverfahren solcher Beschichtungsmittel ist aufwendig, da das Organosilan und die oxidische Komponente alternierend in das Präpolymer eingearbeitet werden.

DE 198 46 659 besitzt den selben Zeitrang wie DE 198 46 660 und betrifft einen Schichtwerkstoff, der mit einer kratzfesten Kunstharzschicht versehen ist, welche ebenfalls nanoskalige, oberflächenmodifizierte Oxidpartikel enthält. DE 198 46 659 lehrt speziell den Einsatz von Acryloxyalkylsilanen zur Erzeugung einer Umhüllung nanoskaliger Oxidpartikel, welche reaktive, strahlenvernetzbare Gruppen besitzt. Die Herstellung des Beschichtungsmittels erfolgt hier ebenfalls durch eine zeitaufwendige Umsetzung einer nanoskaligen Kieselsäure mit Methacryloxypropyltrimethoxysilan (DYNASYLAN^{®} MEMO) in einer Acrylatformulierung in Gegenwart von Wasser, einer Säure sowie eines Netzmittels. Wiederum müssen die Komponenten in einer speziellen Reihenfolge alternierend zusammengebracht werden.

Darüber hinaus sind hydrolysierbare Silankomponenten mit ethylenisch ungesättigten Organogruppen meist hochpreisige Einsatzstoffe. Ferner neigt DYNASYLAN^{®} MEMO bereits in Gegenwart geringer Spuren einer die Polymerisation in Gang setzenden Substanz oder Strahlung zur Reaktion, wodurch die Viskosität einer entsprechenden Zubereitung drastisch ansteigen kann. Zur Vermeidung der unerwünschten Polymerisation müssen Stabilisatoren zugesetzt werden. Daher ist es oft schwierig, die Handhabung der Einsatzstoffe und die Herstellung solcher Beschichtungssysteme zu beherrschen.

Weiterhin sind besagte Beschichtungsmittel vielfach hochviskos und enthalten meist nur einen geringen Anteil an Oxidpartikeln, was sich auf die Kratzfestigkeit der späteren Beschichtung auswirkt. Auch ist es schwierig, solche hochviskosen Beschichtungsmittel auf ein Substrat aufzutragen, insbesondere wenn es sich um dünne, zerreißbare Substrate handelt. Oft ist die Kratzfestigkeit so erhältlicher Beschichtungen verbesserungswürdig. Bei solchen hochviskosen Systemen ist darüber hinaus eine spezielle aufwendige Auftragevorrichtung erforderlich. Häufig werden solchen hochviskosen Beschichtungsmitteln auch Lösungsmittel zugegeben, die zur Erhöhung der organischen Emissionen (VOC-Problematik, VOC = "flüchtige organische Verbindungen") führen.

Der vorliegenden Erfindung lag daher die Aufgabe zugrunde, siliciumorganische Nanokapseln bereitzustellen, die möglichst einfach und wirtschaftlich hergestellt werden können und gute Eigenschaften besitzen. Ein besonderes Anliegen der vorliegenden Erfindung war es, solche Nanokapseln direkt in einem Mittel für kratzfeste Beschichtungen zugänglich zu machen und Artikel mit einer kratzfesten Kunstharzbeschichtung auszustatten.

Die Aufgabe wird erfindungsgemäß entsprechend den Angaben der Patentansprüche gelöst.

Überraschenderweise wurde nun gefunden, dass siliciumorganische Nanokapseln in einfacher und wirtschaftlicher Weise erhältlich sind, wenn man
(i) mindestens ein nanoskaliges Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthaniden
   mit
(ii) mindestens einem Alkyltrialkoxysilan der allgemeinen Formel (II)

   (Z)₃Si-R (II)

   worin die Gruppen Z gleich oder verschieden sind und die Gruppen R und Z dieselbe Bedeutung wie in den Ansprüchen 1 bis 4 besitzen,
   und
(iii) gegebenenfalls einem monomeren und/oder oligomeren Kieselsäureester, der Methoxy-, Ethoxy- oder n- bzw. i-Propoxygruppen trägt und einen mittleren Oligomerisierungsgrad von 1 bis 50 aufweist, bevorzugt ist ein mittlerer Oligomerisierungsgrad von 2 bis 10, besonders bevorzugt einer von 3 bis 5,
   und
(iv) gegebenenfalls einem organofunktionellen Siloxan, dessen Funktionalitäten gleich oder verschieden sind und jedes Si-Atom im Siloxan eine Funktionalität aus der Reihe n-, i-, cyclo-Alkyl, vorzugsweise solche Alkylgruppen mit 1 bis 20 C-Atomen, Fluoralkyl, Chloralkyl, Bromalkyl, Jodalkyl, Alkoxyalkyl, Mercaptoalkyl oder Aminoalkyl trägt und die verbleibenden freien Valenzen der Si-Atome im Siloxan durch Methoxy- oder Ethoxy- oder Hydroxy-Gruppen gesättigt sind,
   und
(v) gegebenenfalls einem weiteren organofunktionellen Silan aus der Reihe Aminoalkylalkoxysilan, Mercaptoalkylalkoxysilan, Alkoxyalkylalkoxysilan, Epoxyalkoxysilan, Fluoralkylalkoxysilan, Chloralkylalkoxysilan, Bromalkylalkoxysilan oder Jodalkylalkoxysilan, wobei Alkoxy vorzugsweise Methoxy, Ethoxy, n- oder i-Propoxy und insbesondere für Triethoxy steht,
in situ in einem härtbaren Kunstharz oder einer Vorläuferstufe eines härtbaren Kunstharzes, d. h. einem flüssigen Präpolymer oder einer Mischung flüssiger Präpolymere, beispielsweise einem Acrylat, Methacrylat, Epoxid, Polyurethan, ungesättigtem Polyester, um nur einige Beispiele zu nennen, umsetzt.

Ferner wurde überraschenderweise gefunden, dass man die folgende Umsetzung zur in-situ-Herstellung einer siliciumorganische Nanokapseln enthaltenden Beschichtungszusammensetzung in besonders vorteilhafter Wiese durchführen kann, wenn man ein Organosilan gemäß (ii), das eine alkylfunktionelle Gruppe, wie eine lineare, verzweigte oder cyclische Alkylgruppe, vorzugsweise mit 1 bis 20 C-Atomen, und mindestens eine hydrolysierbare Gruppe, vorzugsweise Methoxy, Ethoxy, i- oder n-Propoxy oder 2-Methoxyethoxy, oder mindestens eine Hydroxygruppe enthält, und gegebenenfalls oben genannte Komponenten (iii) bis (v) zunächst in ein flüssiges, härtbares Kunstharz oder eine Vorläuferstufe eines Kunstharzes einbringt, Katalysator, gegebenenfalls Netzmittel und Wasser zugibt, mischt und erst anschließend die Komponente (i) unter guter Durchmischung zusetzt sowie entstehenden Hydrolysealkohol aus dem System abzieht, d. h., dass man beim vorliegenden Verfahren gegenüber der Lehre des Standes der Technik, wie sie aus DE 198 46 660 sowie DE 198 46 659 zu entnehmen ist, die siliciumorganischen Komponenten und die oxidische Komponente nicht alternierend in das Präpolymer einarbeitet.

Das vorliegende Verfahren ist ferner überraschend und vorteilhaft, da so ein siliciumorganische Nanokapseln enthaltendes Beschichtungsmittel für Kratzfestbeschichtungen erhältlich ist, das niedrigviskos und homogen ist, wobei das Beschichtungsmittel einen besonders hohen Anteil an siliciumorganischen Nanopartikeln enthalten kann. Darüber hinaus kann man insbesondere mit erfindungsgemäßen alkylfunktionelle siliciumorganische Nanokapseln enthaltenden Beschichtungsmitteln eine ausgezeichnete Kratzfestigkeit erzielen.

Im Allgemeinen hydrolysieren bzw. kondensieren dabei hydrolysierbare Gruppen der siliciumorganischen Komponenten miteinander und umhüllen die oxidischen Nanopartikel (KA-O). Gegebenenfalls können die hydrolysierbaren Gruppen oder Hydroxygruppen mit an der Oberfläche der oxidischen Nanopartikel (KA-O) befindlichen Hydroxygruppen oder mit freien Valenzen siliciumorganischen Komponenten der Umhüllung B unter Ausbildung einer kovalenten Bindung kondensieren.

Geeigneterweise erfolgt beim vorliegenden Verfahren die besagte Umsetzung in Gegenwart definierter Mengen Wasser. Bevorzugt setzt man pro Mol einer hydrolysierbaren, Si-gebundenen Gruppe der siliciumorganischen Komponenten 0,5 bis 6 Mol Wasser, besonders vorzugsweise 0,5 bis 4 Mol Wasser, ganz besonders vorzugsweise 1 bis 1,5 Mol Wasser, ein. Ferner ist der Einsatz eines Katalysators sowie eines Netzmittels bevorzugt.

Insbesondere lassen sich beim vorliegenden Verfahren durch den Einsatz von Methyltrialkoxysilan sowie n-Propyltrialkoxysilan Beschichtungszusammensetzungen mit hohen Feststoffgehalten, hoher Transparenz und guten Verarbeitungseigenschaften erhalten.

Im Allgemeinen strebt man bei solchen, dilatanten Beschichtungssystemen eine Viskosität bis 2.500 mPa s an. Vorzugsweise besitzen erfindungsgemäße lösemittelfreie Beschichtungsmittel eine Viskosität von > 500 bis 1.000 mPa s. Geeigneterweise betragen dabei die Gehalte an nanoskaligen Kapseln in erfindungsgemäßen Beschichtungsmitteln bis zu 60 Gew.-%.

Ferner erhält man beim vorliegenden Verfahren im Wesentlichen vollständig und mehrschichtig siliciumorganisch umhüllte nanoskalige Oxid- bzw. Mischoxidpartikel, so genannte siliciumorganische Nanokapseln, die direkt in vorteilhafter Weise fein dispergiert in einem härtbaren Kunstharz oder in einer Vorläuferstufe eines härtbaren Kunstharzes anfallen und das vergleichsweise niedrigviskose Produktgemisch als solches oder als Basis für Lacke zur kratzfesten Beschichtung von Oberflächen verwendet werden kann.

Erfindungsgemäße Beschichtungsmittel bzw. Lacke können als weitere Komponenten beispielsweise Initiatoren für die photochemische Härtung bzw. UV-Härtung, wie Darocur^{®} 1173, Lucirin^{®} TPO-L, Stabilisatoren, wie HALS-Verbindungen, Tinuvine sowie Antioxidantien, wie Irganox^{®} enthalten.

Durch die vorliegende Herstellungsweise ist ein lösemittelfreier, vergleichsweise niedrigviskoser Lack bzw. eine Zusammensetzung mit erfindungsgemäßen siliciumorganischen Nanokapseln in einfacher und wirtschaftlicher Weise direkt zugänglich.

Das Beschichten eines Substrats mit der vorliegenden Zusammensetzung kann in der Regel aufgrund der geringen Viskosität der Zusammensetzung mit vergleichsweise geringem Aufwand erfolgen.

Die Härtung der Beschichtung erfolgt geeigneterweise photochemisch durch UV-Bestrahlung oder durch Bestrahlung mit Elektronenstrahlen. Üblicherweise führt man die Bestrahlung bei einer Temperatur von 10 bis 60 °C, vorteilhaft bei Umgebungstemperatur, durch.

Dabei erhält man eine Beschichtung, die sich in überraschender Weise durch eine höhere Packungsdichte und eine hervorragende Kratzfestigkeit auszeichnet. Es wird erkannt, dass die nicht mit der Polymermatrix polymersierten Alkylgruppen der erfindungsgemäßen siliciumorganischen Nanokapseln eine steuernde Funktion übernommen haben. So zeichnen sich erfindungsgemäß beschichtete Substrate bzw. Artikel in der Regel durch eine hervorragende Kratzfestigkeit gemäß DIN 53 799 (Hartkugel) sowie durch eine gute Abriebbeständigkeit (DIN 52 347) aus.

Gegenstand der vorliegenden Erfindung sind daher siliciumorganische Nanokapseln, bestehend aus einem nanoskaligen Kern A, welcher mindestens ein Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthaniden enthält, und einer siliciumorganischen Umhüllung B, wobei die siliciumorganische Umhüllung B mindestens einen siliciumorganischen Bestandteil der allgemeinen Formel Ia

(Si'O-)ₓSi-R (Ia),

worin R für eine lineare, verzweigte, cyclische oder substituierte Alkylgruppe mit 1 bis 50 C-Atomen steht und x eine Zahl von 0 bis 20 ist, wobei die noch freien Valenzen von Si durch SiO- und/oder -Z und die freien Valenzen Si' durch SiO-, -R und/oder -Z gesättigt sind, die Gruppen Z gleich oder verschieden sind und Hydroxy- und/oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib

(KA-O)-[(Si'O-)ₓSi-R] (Ib)

1 bis 50 C-Atomen steht und x eine Zahl von 0 bis 20 ist, wobei die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy- und/oder Alkoxy-Reste darstellen, und jedes Si bzw. Si' der Umhüllung B maximal eine Gruppe R trägt, an den Kern A(KA-O) gebunden ist.

Als lineare, verzweigte oder cyclische Alkylgruppen der erfindungsgemäßen Nanokapseln sind solche mit 1 bis 20 C-Atomen, besonders bevorzugt sind Methyl-, Ethyl-, n-Propyl-, i-Propyl-, n-Butyl-, i-Butyl-, sec.-Butyl, t-Butyl-, n-Hexyl-, n-Octyl-, i-Octyl-, n-Dodecyl-, n-Hexadecyl- oder n-Octadecyl-Gruppen. Als substituierte Alkylgruppen bevorzugt man hier Fluoralkylgruppen der allgemeinen Formel CF₃(CF₂)_{y}(CH₂CH₂)_{z}, worin y eine Zahl von 0 bis 10 und z gleich 0 oder 1 sind, besonders vorzugsweise Heptafluorpropyl- oder Tridecafluor-1,1,2,2-tetrahydrooctyl.

Als Alkoxy-Reste der Gruppen Z sind solche mit einem lineare, cyclischen oder verzweigten Alkylrest mit 1 bis 18 C-Atomen bevorzugt, insbesondere sind Methoxy-, Ethoxy-, i- oder n-Propoxygruppen bevorzugt.

Geeigneterweise besteht der Kern A der erfindungsgemäßen polymerisierbaren siliciumorganischen Nanokapseln aus mindestens einem Oxid und/oder Mischoxid (KA-O), Oxidhydroxide sind hiermit eingeschlossen, aus der Reihe der Elemente Si, Al, Ti und/oder Zr, beispielsweise SiO₂, wie pyrogen hergestellte Kieselsäure, Silikate, Al₂O₃, Aluminiumhydroxid, Alumosilikate, TiO₂, Titanate, ZrO₂ oder Zirkonate.

Einschließlich der Umhüllung B weisen erfindungsgemäße polymerisierbare siliciumorganische Nanokapseln vorzugsweise einen mittleren Durchmesser von 10 bis 400 nm, besonders vorzugsweise 20 bis 100 nm, auf.

Gleichfalls sind Gegenstand der vorliegenden Erfindung siliciumorganische Nanokapseln, die erhältlich sind durch eine Umsetzung von
(i) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide mit
(ii) mindestens einem Alkyltrialkoxysilan der allgemeinen Formel (II)

   (Z)₃Si-R (II)

   worin die Gruppen Z gleich oder verschieden sind und die Gruppen R und Z dieselbe oben genannte Bedeutung besitzen,
   und
(iii) gegebenenfalls einem monomeren und/oder oligomeren Kieselsäureester, welcher Methoxy-, Ethoxy-, n-Propoxy- oder i-Propoxygruppen trägt und einen mittleren Oligomerisierungsgrad von 1 bis 50 aufweist, beispielsweise Tetramethoxysilan, Tetraethoxysilan, wie DYNASIL^{®} A, Tetrapropoxysilan, wie DYNASIL^{®} P, oder ein oligomeres Ethylsilikat, wie DYNASIL^{®} 40,
   und
(iv) gegebenenfalls einem organofunktionellen Siloxan, dessen Funktionalitäten gleich oder verschieden sind und jedes Si-Atom im Siloxan eine Funktionalität aus der Reihe n-, i-, cyclo-Alkyl, Fluoralkyl, Chloralkyl, Bromalkyl, Jodalkyl, Alkoxyalkyl, Mercaptoalkyl oder Aminoalkyl trägt und die verbleibenden freien Valenzen der Si-Atome im Siloxan durch Methoxy- oder Ethoxy- oder Hydroxy-Gruppen gesättigt sind, bevorzugt sind solche Siloxane mit einem mittleren Oligomerisierungsgrad von 1 bis 20, besonders vorzugsweise mit einem mittleren Oligomerisierungsgrad von 2 bis 10, wie sie insbesondere aus den deutschen Patentanmeldungen 199 55 047.6, 199 61 972.7, EP 0 518 057, EP 0 590 270, EP 0 716 127, EP 0 716 128, EP 0 760 372, EP 0 814 110, EP 0 832 911, EP 0 846 717, EP 0 846 716, EP 0 846 715, EP 0 953 591, EP 0 955 344, EP 0 960 921, EP 0 978 525, EP 0 930 342, EP 0 997 469, EP 1 031 593 und EP 0 075 697 zu entnehmen sind,
   und
(v) gegebenenfalls einem weiteren organofunktionellen Silan aus der Reihe Aminoalkylalkoxysilan, Mercaptoalkylalkoxysilan, Alkoxyalkylalkoxysilan, Epoxyalkoxysilan, Fluoralkylalkoxysilan, Chloralkylalkoxysilan, Bromalkylalkoxysilan oder Jodalkylalkoxysilan,
   welche in situ in einem härtbaren Kunstharz oder einer Vorläuferstufe eines Kunstharzes erfolgt.

Ferner ist Gegenstand der vorliegenden Erfindung ein Verfahren zur Herstellung von siliciumorganischen Nanokapseln sowie zur Herstellung einer siliciumorganische Nanokapseln enthaltenden Zusammensetzung, das dadurch gekennzeichnet ist, dass man
(i) mindestens ein nanoskaliges Oxid und/oder Mischoxid mindestens eines Metalls oder Halbmetalls der dritten bis sechsten Hauptgruppe, der ersten bis achten Nebengruppe des Periodensystems der Elemente oder der Lanthanide
   mit
(ii) mindestens einem Alkyltrialkoxysilan der allgemeinen Formel (II)

   (Z)₃Si-R (II)

   worin die Gruppen Z gleich oder verschieden sind und die Gruppen R und Z dieselbe Bedeutung wie in den Ansprüchen 1 bis 4 besitzen,
   und
(iii) gegebenenfalls einem monomeren und/oder oligomeren Kieselsäureester, der Methoxy-, Ethoxy-, n- Propoxy- oder i-Propoxygruppen trägt und einen mittleren Oligomerisierungsgrad von 1 bis 50 aufweist,
   und
(iv) gegebenenfalls einem organofunktionellen Siloxan, dessen Funktionalitäten gleich oder verschieden sind und jedes Si-Atom im Siloxan eine Funktionalität aus der Reihe n-, i-, cyclo-Alkyl, Fluoralkyl, Chloralkyl, Bromalkyl, Jodalkyl, Alkoxyalkyl, Mercaptoalkyl oder Aminoalkyl trägt und die verbleibenden freien Valenzen der Si-Atome im Siloxan durch Methoxy- oder Ethoxy- oder Hydroxy-Gruppen gesättigt sind,
   und
(v) gegebenenfalls einem weiteren organofunktionellen Silan aus der Reihe Aminoalkylalkoxysilan, Mercaptoalkylalkoxysilan, Epoxyalkoxysilan, Alkoxyalkylalkoxysilan, Fluoralkylalkoxysilan, Chloralkylalkoxysilan, Bromalkylalkoxysilan oder Jodalkylalkoxysilan,
   in situ in einem flüssigen, härtbaren Kunstharz oder einer Vorläuferstufe eines Kunstharzes umsetzt.

Im Allgemeinen legt man beim erfindungsgemäßen Verfahren die in der Regel flüssigen Komponenten des härtbaren Kunstharzes oder die Vorläuferstufe eines härtbaren Kunstharzes, d. h. das Präpolymer bzw. das Präpolymergemisch, vor und erwärmt, gibt eine definierte Menge Wasser, gegebenenfalls Katalysator, gegebenenfalls Netzmittel und die Komponenten (ii) bis (v) zu und arbeitet anschließend unter guter Durchmischung die oxidische Komponente (i) ein. Geeigneterweise wird der dabei durch Hydrolyse oder Kondensation entstehende Alkohol aus dem System entfernt.

Bevorzugt setzt man beim erfindungsgemäßen Verfahren als siliciumorganische Komponente (ii) Methyltrimethoxysilan (DYNASYLAN^{®} MTMS), Methyltriethoxysilan (DYNASYLAN^{®} MTES), Ethyltrimethoxysilan (DYNASYLAN^{®} ETMS), Ethyltriethoxysilan (DYNASYLAN^{®} ETES), n-Propyltrimethoxysilan (DYNASYLAN^{®} PTMO), n-Propyltriethoxysilan (DYNASYLAN^{®} PTEO), i-Butyltrimethoxysilan (DYNASYLAN^{®} IBTMO), i-Butyltriethoxysilan (DYNASYLAN^{®} IBTEO), Octyltrimethoxysilan (DYNASYLAN^{®} OCTMO), Octyltriethoxysilan (DYNASYLAN^{®} OCTEO), Hexadecyltrimethoxysilan (DYNASYLAN^{®} 9116) sowie Hexadecyltriethoxysilan (DYNASYLAN^{®} 9216) ein.

Als zusätzliche monomere Komponente (v) kann man aber auch beispielsweise 3-Chlorpropyltrialkoxysilane, 3-Brompropyltrialkoxysilane, 3-Jodpropyltrialkoxysilane, 3-Aminopropyltrimethoxysilan (DYNASYLAN^{®} AMMO), 3-Aminopropyltriethoxysilan (DYNASYLAN^{®} AMEO), N-(n-Butyl)-3-aminopropyltrimethoxysilan (DYNASYLAN^{®} 1189), n-Aminoethyl-3-aminopropylmethyldimethoxysilan (DYNASYLAN^{®} 1411), 3-Aminopropylmethyldiethoxysilan (DYNASYLAN^{®} 1505), N-Aminoethyl-3-amino-propyltrimethoxysilan (DYNASYLAN^{®} DAMO), triaminofunktionelles Propyltrimethoxysilan (DYNASYLAN^{®} TRIAMO), triaminofunktionelle Propylmethyldialkoxysilane, 3-Glycidyloxypropyltrimethoxysilan (DYNASYLAN^{®} GLYMO), 3-Glycidyloxypropyltriethoxysilan (DYNASYLAN^{®} GLYEO), 3-Mercaptopropyltrimethoxysilan (DYNASYLAN^{®} MTMO), Perfluoralkyltrialkoxysilane, Fluoralkyltrialkoxysilane, u. a. Tridecafluoroctyltrimethoxysilan, Tridecafluoroctyltriethoxysilan (DYNASYLAN^{®} F 8261), (H₅C₂O)₃Si(CH₂)₃-S₄-(CH₂)₃Si(OC₂H₅)₃ 1,4-Bis(3-triethoxysilylpropyl)tetrasulfan (Si-69), (H₅C₂O)₃Si(CH₂)₃-S₂-(CH₂)₃Si(OC₂H₅)₃ 1,2-Bis(3-triethoxysilylpropyl)disulfan (Si-266), 3-[Methoxy(polyethylenglycid)]propyltrialkoxysilane, 3-Amino-2-methylpropyltrialkoxysilane, (Cyclohex-3-ethyl)-ethyltrialkoxysilane, 4-(2-Trialkoxysilylethyl)-1,2-epoxycyclohexane, Bis(3-alkoxysilylpropyl)amine, Tris(3-alkoxysilylpropyl)amine, wobei für eine der zuvor genannten Alkoxygruppen vorteilhaft Methoxy, Ethoxy oder i- bzw. n-Propoxy steht, einsetzen.

Gegebenenfalls kann man aber auch zusätzlich monomere siliciumorganische Komponenten mit photochemisch reaktiven Gruppen, wie Vinyl-, Allyl-, Aryl- oder 3-Methacryloxypropylalkoxysilane einsetzen.

Vorzugsweise setzt man beim erfindungsgemäßen Verfahren ein nanoskaliges Oxid und/oder Mischoxid (KA-O) mit einem durchschnittlichen Partikeldurchmesser von 1 bis 100 nm, besonders vorzugsweise von 5 bis 50 nm und ganz besonders vorzugsweise von 10 bis 40 nm, ein. Dabei können die Oxide bzw. Mischoxide eine BET-Oberfläche von 40 bis 400 m²/g, vorzugsweise von 60 bis 250 m²/g, besonders vorzugsweise von 80 bis 250 m²/g, besitzen. Als nanoskalige Oxide oder Mischoxide kann man beispielsweise - aber nicht ausschließlich - pyrogene Kieselsäure, die durch weitere Metall- oder Halbmetallanteile modifiziert sein kann, wie Aluminium, Titan, Eisen oder Zirkon, einsetzen.

Erfindungsgemäß setzt man vorzugsweise 0,1 bis 60 Gew.-%, vorzugsweise 15 bis 50 Gew.-%, besonders vorzugsweise 20 bis 45 Gew.-%, ganz besonders vorzugsweise 25 bis 40 Gew.-%, insbesondere 30 bis 35 Gew.-%, nanoskaliges Oxid und/oder Mischoxid (KA-O), bezogen auf die Zusammensetzung, ein.

Ferner ist bevorzugt, dass man die oxidische Komponente (i) und mindestens eine silanbasierende Komponente, insbesondere (ii), (iii), (iv) und/oder (v), in einem Gewichtsverhältnis von 4 : 1 bis 1 : 1, besonders vorzugsweise von 3,5 : 1 bis 1,5 : 1, ganz besonders vorzugsweise von 3:1 bis 2:1, einsetzt. So beträgt bei erfindungsgemäßen siliciumorganischen Nanokapseln das Gewichtsverhältnis zwischen Kern A und Umhüllung B vorzugsweise 1 : 1 bis 4 : 1.

Als flüssiges bzw. härtbares Kunstharz oder als Vorläuferstufe eines flüssigen, härtbaren Kunstharzes, d. h. einem Präpolymer oder einem Gemisch aus Präpolymeren, verwendet man beim erfindungsgemäßen Verfahren beispielsweise Acrylate, Methacrylate, Epoxide, Epoxidharze, Polyurethane, Polyurethanharze, ungesättigte Polyester, ungesättigte Polyesterharze, Epoxyacrylate, Polyesteracrylate, Urethanacrylate, Siliconacrylate, polyfunktionelle monomere Acrylate, wie Trimethylolpropantriacrylat, Trimethylolpropantrimethacrylat, ethoxyliertes Trimethylolpropantriacrylat, propoxyliertes Trimethylolpropantriacrylat, Pentaerythrittriacrylat, ethoxyliertes Pentaerythritoltetraacrylat, alkoxylierte Tetraacrylate, Di-trimethylolpropantetraacrylate, 3,4-Epoxycyclohexan-1-carbonsäure-3,4-epoxycyclohexyl-1'-methylester, 1,6-Hexandioldiacrylat - um nur einige Beispiele zu nennen - oder Gemische aus zwei oder mehreren der zuvor genannten Kunstharze bzw. Präpolymeren, beispielsweise Gemische aus mono- und/oder bifunktionellen bzw. polyfunktionellen monomeren, gegebenenfalls niedrigviskosen Acrylaten.

Die erfindungsgemäße Umsetzung erfolgt in der Regel in Gegenwart einer wohl definierten Menge an Wasser. Vorzugsweise setzt man dazu pro Mol Si der Komponenten (ii) bis (v) 1 bis 6 Mol Wasser ein.

Ferner wird die erfindungsgemäße Umsetzung bevorzugt in Gegenwart eines Katalysators durchgeführt. Als Katalysator ist insbesondere eine Säure geeignet, vorzugsweise Maleinsäureanhydrid, Maleinsäure, Essigsäure, Essigsäureanhydrid, Glycolsäure, Zitronensäure, Methansulfonsäure sowie Phosphorsäure.

Weiterhin kann der Einsatz eines Netzmittels für die Durchführung der erfindungsgemäßen Umsetzung hilfreich sein. So führt man die Umsetzung vorzugsweise in Gegenwart von Natriumdodecylsulfat durch.

Beim erfindungsgemäßen Verfahren wird die Umsetzung bevorzugt bei einer Temperatur im Bereich von 30 bis 100 °C, vorzugsweise bei einer Temperatur im Bereich von 50 bis 80 °C, durchgeführt.

Durch Hydrolyse und Kondensation entsteht bei der erfindungsgemäßen Umsetzung in der Regel ein Alkohol, den man vorzugsweise während der Umsetzung und/oder danach aus dem Reaktionssystem entfernt. Das Entfernen des bei der Umsetzung entstandenen Alkohols kann destillativ, geeigneterweise unter vermindertem Druck, durchgeführt werden. In der Regel wird dabei der Gehalt an Alkohol im Produktgemisch, d. h. in der durch die erfindungsgemäße Umsetzung erhaltenen Zusammensetzung, auf < 2 Gew.-%, vorzugsweise auf 0,01 bis 1 Gew.-%, besonders vorzugsweise auf 0,1 bis 0,5 Gew.-%, bezogen auf die Zusammensetzung, abgesenkt, sodass man in vorteilhafter Weise eine Lösemittel freie Zusammensetzung, d. h. eine Lösemittel freie Lackbasis bzw. einen Lösemittel freien Lack erhält.

Solche erfindungsgemäßen Zusammensetzungen können direkt oder nach Zugabe weiterer Lackkomponenten in hervorragender Weise für die kratzfeste Beschichtung von Substraten verwendet werden.

Gegenstand der vorliegenden Erfindung ist somit auch eine Zusammensetzung auf der Basis eines härtbaren Kunstharzes oder auf der Basis einer Vorläuferstufe eines härtbaren Kunstharzes, die erfindungsgemäße bzw. erfindungsgemäß hergestellte siliciumorganische Nanokapseln enthält.

Weiterhin ist Gegenstand der vorliegenden Erfindung eine Zusammensetzung oder ein Lack auf der Basis eines härtbaren Kunstharzes oder auf der Basis einer Vorläuferstufe eines härtbaren Kunstharzes, die nach mindestens einem der Ansprüche 1 bis 20 erhältlich ist.

Geeigneterweise kann man der erfindungsgemäßen Zusammensetzung bzw. dem erfindungsgemäßen Lack weitere Komponenten zusetzen, beispielsweise Initiatoren für die photochemische Lackhärtung, Darocur^{®} 1173, Lucirin^{®} TPO-L, Lackstabilisatoren, wie HALS-Verbindungen, Tinuvine sowie Antioxidantien, wie Irganox^{®}. Solche Zusatzstoffe werden in der Regel in Mengen von 0,1 bis 5 Gew.-%, vorzugsweise von 2 bis 3 Gew.-%, bezogen auf die Zubereitung bzw. den Lack, eingesetzt. Das Einbringen weiterer Komponenten in das Lacksystem erfolgt geeigneterweise unter guter Durchmischung.

Die erfindungsgemäßen Zubereitungen bzw. Lacke zeichnen sich vorteilhaft trotz eines hohen Gehalts an polymerisierbaren siliciumorganischen Nanokapseln durch eine vergleichsweise geringe Viskosität von 500 bis 1.000 mPa s aus. Dabei verhalten sich die Systeme in der Regel dilatant.

Somit ist auch Gegenstand der Erfindung die Verwendung einer erfindungsgemäßen Zusammensetzung als Lack oder als Basis für die Herstellung einer Beschichtungszusammensetzung oder eines Lacks, insbesondere für Systeme zur Kratzfestbeschichtung.

Die Applikation der erfindungsgemäßen Zusammensetzung bzw. eines erfindungsgemäßen Lacks erfolgt in der Regel durch Aufbringen auf ein Substrat. Für die Beschichtung von Substraten kann man die üblichen Beschichtungsverfahren anwenden, wie z. B. Walzenauftrag, Aufrakeln, Tauchen, Fluten, Gießen, Spritzen, Aufstreichen.

Beispielsweise kann man die erfindungsgemäße Zubereitung bzw. den Lack auf bahnförmige Substrate, wie Papier oder Kunststofffolien, durch Einsatz eines Walzauftragswerks gleichmäßig auftragen und anschließend härten.

Geeigneterweise kann man die Beschichtung bei Umgebungstemperatur, d. h. Lacktemperatur, durch ein UV- oder Elektronenstrahlverfahren (ESM) umweltfreundlich, da lösemittelfrei, aushärten. Bevorzugt erzeugt man für die Elektronenstrahl-Härtung Elektronen mit einer Energie von rd. 140 keV, wobei die Dosis bei 30 bis 60 kGy, vorzugsweise 40 bis 50 kGy, liegt. Vorzugsweise liegt der O₂-Restgehalt bei < 200 ppm.

Man kann die Lackhärtung aber auch mittels UV-Bestrahlung durch Einsatz von mono- oder polychromatischen UV-Lampen mit einer Wellenlänge von 150 bis 400 nm durchführen. Auch bei der UV-Härtung kann man bei Umgebungstemperatur, beispielsweise zwischen 10 und 60 °C, arbeiten. Auch hierbei liegt der O₂-Gehalt geeigneterweise bei < 200 ppm.

So kann man durch den Einsatz erfindungsgemäßer Zusammensetzungen bzw. Lacke in besonders vorteilhafter Weise hervorragend kratzfeste Beschichtungen erzeugen. Darüber hinaus besitzen erfindungsgemäße Beschichtungen auch eine gute Abriebbeständigkeit. Die Bestimmung der Ritzhärte bzw. Kratzfestigkeit erfolgt hier in der Regel gemäß DIN 53 799 unter Verwendung einer Hartmetallkugel. Der Abrieb kann beispielsweise nach DIN 52 347 unter Einsatz beschichteter Planscheiben mit Rollenmaterial erfolgen.

Somit ist ebenfalls Gegenstand der vorliegenden Erfindung ein Verfahren zur Herstellung einer kratzfesten Beschichtung, das dadurch gekennzeichnet ist, dass man eine erfindungsgemäße Zusammensetzung oder einen erfindungsgemäßen Lack auf einen Untergrund bzw. ein Substrat aufbringt und vorzugsweise photochemisch aushärtet. Man kann aber auch chemisch, beispielsweise oxidativ, aushärten, beispielsweise durch Einsatz von Peroxid und höherer Temperatur.

Gegenstand der vorliegenden Erfindung sind ferner kratzfeste Beschichtungen, die erhältlich sind durch Aufbringen einer erfindungsgemäßen Zusammensetzung oder eines erfindungsgemäßen Lacks nach mindestens einem der Ansprüche 21 bis 26.

Erfindungsgemäße Beschichtungen weisen vorzugsweise eine Schichtdicke von 1 bis 100 µm, besonders vorzugsweise von 2 bis 40 µm und ganz besonders vorzugsweise von 5 bis 15 µm, auf.

So kann man in besonders einfacher und wirtschaftlicher Weise beispielsweise Metalle, wie Aluminium, Eisen, Stahl, Messing, Kupfer, Silber, Magnesium, Leichtmetalllegierungen, Kunststoff- sowie Metallfolien, Holz, Papier, Pappe, Textilien, Steinwaren, Kunststoffe, Thermoplaste, Polycarbonat, Glas, Keramik, mit einer besonders kratzfesten Beschichtung ausstatten. Die Auswahl der Substratmaterialien zur Beschichtung ist uneingeschränkt. Solche Substrate können beispielsweise mit einer Schutzbeschichtung ausgestattet werden, so genanntes "Topcoating", wie es beispielsweise als Klarlacksystem in der Automobilindustrie angewendet wird.

Insbesondere sind nach dem vorliegenden Beschichtungsverfahren in einfacher und wirtschaftlicher Weise kratzfest ausgestattete Artikel, wie Dekorpapier, Aluminiumfolien, Polycarbonat-Autoscheiben, PVC-Fensterrahmen, Türen, Arbeitsplatten, erhältlich.

Erfindungsgemäßes Dekorpapier wird beispielsweise für eine gleichzeitig kostengünstige, kratzfeste und optisch vorteilhafte Oberflächengestaltung von Möbeln verwendet.

Daher sind Gegenstand der vorliegenden Erfindung Artikel mit einer erfindungsgemäßen Beschichtung, erhältlich nach Anspruch 27.

Die vorliegende Erfindung wird durch die nachfolgenden Beispiele näher erläutert:

### Beispiele

### Einsatzstoffe:

| **Partikel Kern A** | | | |
|---|---|---|---|
| **Rohstoff** | | **mittlere Partikelgröße** | **Oberfläche nach BET** (DIN 66 131; in m²/g) |
| pyrogenes Siliciumdioxid | AEROSIL^{®} 90 | 20 nm | 90 ± 20 |
| | AEROSIL^{®} 200 | 14 nm | 200 ± 20 |
| | AEROSIL^{®} TT 600 | 40 nm | 200 ± 50 |

| **Umhüllung B** | |
|---|---|
| **Rohstoff** | |
| Methyltrimethoxysilan | DYNASYLAN^{®} MTMS |
| n-Propyltrimethoxysilan | DYNASYLAN^{®} PTMO |
| n-Propyltriethoxysilan | DYNASYLAN^{®} PTEO |

| **Organisches Substrat/Kunstharzkomponente** | |
|---|---|
| Trimethylolpropanmethacrylat | Sartomer^{®} 350 |
| Ethoxyliertes Trimethylolpropantriacrylat | Sartomer^{®} 454 |
| Ethoxyliertes Pentaerythritoltetraacrylat | Sartomer^{®} 494 |
| 3,4-Epoxycyclohexan-1-carbonsäure-3,4-epoxycyclohexyl-1 '-methylester | Cyracure^{®} 6105 |

| **Hilfsstoffe** | |
|---|---|
| Katalysator | Maleinsäureanhydrid bzw. Maleinsäure |
| | Essigsäure |
| | Glycolsäure |
| Netzmittel | Natriumdodecylsulfat |
| Reaktand | Wasser |

### Beispiel 1

In einem Rührgefäß werden 28,0 kg Sartomer 494 sowie 48 g 4-Hydroxyanisol vorgelegt und auf 65 bis 70 °C erwärmt. Zum erwärmten Acrylat werden eine Lösung von 0,15 kg Glykolsäure und 0,098 kg Natriumdodecylsulfat in 1,965 kg Wasser sowie innerhalb von 30 Minuten 4,597 kg DYNASYLAN PTMO gegeben. Anschließend dosiert man im oben angegebenen Temperaturbereich unter intensivem Rühren 9,194 kg AEROSIL 200 innerhalb von einer Stunde. Man rührt noch 3 Stunden bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 2

In einem Rührgefäß werden 28,0 kg Sartomer 494 sowie 48 g 4-Hydroxyanisol vorgelegt und auf 65 bis 70 °C erwärmt. Zum erwärmten Acrylat werden eine Lösung von 0,15 kg Essigsäure und 0,163 kg Natriumdodecylsulfat in 3,264 kg Wasser sowie innerhalb von 30 Minuten 7,636 kg DYNASYLAN PTMO gegeben. Anschließend dosiert man im oben angegebenen Temperaturbereich unter intensivem Rühren 15,273 kg AEROSIL TT600 innerhalb von einer Stunde. Man rührt noch 2 Stunden bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 3

In einem Rührgefäß werden 28,06 kg Sartomer 350 sowie 48 g 4-Hydroxyanisol vorgelegt und auf 65 bis 70 °C erwärmt. Zum erwärmten Acrylat werden eine Lösung von 0,15 kg Maleinsäureanhydrid und 0,0536 kg Natriumdodecylsulfat in 1,073 kg Wasser sowie innerhalb von 30 Minuten 3,725 kg DYNASYLAN PTEO gegeben. Anschließend dosiert man im oben angegebenen Temperaturbereich unter intensivem Rühren 8,965 kg AEROSIL 90 innerhalb von einer Stunde. Man rührt noch 4 Stunden bei 65 bis 70 °C weiter und destilliert dann im Vakuum das durch die Hydrolyse des Silans entstandene Ethanol ab. Zuletzt wird der Ansatz auf Raumtemperatur abgekühlt.

### Beispiel 4

In einem Rührgefäß werden 25 kg Sartomer 454 und 48 g 4-Hydroxyanisol vorgelegt und auf 65 bis 70 °C erwärmt. Zum erwärmten Acrylat werden eine Lösung von 0,15 kg Maleinsäureanhydrid und 0,075 kg Natriumdodecylsulfat in 1,5 kg Wasser sowie innerhalb von 30 Minuten 4,153 kg DYNASYLAN MTMS gegeben.

Anschließend dosiert man im oben angegebenen Temperaturbereich unter intensivem Rühren 10,0 kg Aluminiumoxid C innerhalb von einer Stunde. Man rührt noch 3 Stunden bei 65 bis 70 °C weiter und destilliert dann im Vakuum das durch die Hydrolyse des Silans entstandene Methanol ab. Zuletzt wird der Ansatz auf Raumtemperatur abgekühlt.

### Vergleichsbeispiel A

### AEROSIL^{®} 200 / DYNASYLAN^{®} VTMO / Sartomer^{®} 494:

In einem Rührgefäß werden 29,2 kg Sartomer 494 (Fa. Cray Valley) sowie 16 g 4-Hydroxyanisol vorgelegt und auf 65 bis 70 °C erwärmt. Zum erwärmten Acrylat werden eine Lösung von 0,15 kg Maleinsäureanhydrid und 0,072 kg Natriumdodecylsulfat in 1,44 kg Wasser sowie innerhalb von 30 Minuten 3,6 kg DYNASYLAN VTMO (Vinyltrimethoxysilan) gegeben. Anschließend dosiert man im oben angegebenen Temperaturbereich unter intensivem Rühren 7,2 kg AEROSIL 200 innerhalb von 1 bis 2 Stunden. Man rührt noch eine Stunde bei 65 bis 70 °C weiter und entfernt unter vermindertem Druck Methanol aus dem System. Zuletzt wird der Ansatz auf Raumtemperatur abgekühlt.

### Vergleichsbeispiel B

### AEROSIL^{®} 200 / DYNASYLAN^{®} VTEO / Sartomer^{®} 494:

In einem Rührgefäß werden 29,2 kg Sartomer 494 (Fa. Cray Valley) sowie 48 g 4-Hydroxyanisol vorgelegt und auf 65 bis 70 °C erwärmt. Zum erwärmten Acrylat werden eine Lösung von 0,15 kg Maleinsäureanhydrid und 0,075 kg Natriumdodecylsulfat in 1,5 kg Wasser sowie innerhalb von 30 Minuten 4,81 kg DYNASYLAN VTEO gegeben. Anschließend dosiert man im oben angegebenen Temperaturbereich unter intensivem Rühren 7,466 kg AEROSIL 200 innerhalb von einer Stunde. Man rührt noch 3 Stunden bei 65 bis 70 °C weiter und entfernt unter vermindertem Druck Ethanol aus dem System. Zuletzt wird der Ansatz auf Raumtemperatur abgekühlt.

### Vergleichsbeispiel C

### AEROSIL^{®} 200 / DYNASYLAN^{®} MEMO / Sartomer^{®} 494:

In einem Rührgefäß werden 29,2 kg Sartomer 494 (Fa. Cray Valley) sowie 16 g 4-Hydroxyanisol vorgelegt und auf 65 bis 70 °C erwärmt. Zum erwärmten Acrylat werden eine Lösung von 0,15 kg Maleinsäureanhydrid und 0,0262 kg Natriumdodecylsulfat in 0,5246 kg Wasser sowie innerhalb von 30 Minuten 3,6 kg DYNASYLAN MEMO gegeben. Anschließend dosiert man im oben angegebenen Temperaturbereich unter intensivem Rühren 7,2 kg AEROSIL 200 innerhalb von 1 bis 2 Stunden. Man rührt noch 60 Minuten bei 65 bis 70 °C weiter und entfernt unter vermindertem Druck Methanol aus dem System. Zuletzt wird der Ansatz auf Raumtemperatur abgekühlt.

### Vergleichsbeispiel D

100 % Sartomer^{®} 494:

### Anwendungsbeispiele

Die Lacke aus den Beispielen 1 bis 4 sowie der Vergleichsbeispiele A bis C wurden auf quadratischen PVC-Platten (Kantenlänge 10 cm, Dicke 2 mm) mit einem Rakel der Spaltbreite 50 µm manuell aufgetragen und im Niederenergie-Elektronenbeschleuniger (140 keV) mit einer Dosis von 50 kGy ausgehärtet. Der Sauerstoff-Restgehalt im Beschleuniger betrug < 200 ppm. Ebenso wird mit Sartomer 494 verfahren (Vergleichsbeispiel D).

Die Proben werden auf ihre Ritzhärte gemäß DIN 53 799 unter Einsatz einer Hartmetallkugel getestet. Ferner werden die Proben auf Abriebfestigkeit gemäß DIN 52 347 und ASTM D-1044 unter Verwendung von "Schmirgelpapier" S-42 getestet. Die Versuchsergebnisse sind in Tabelle 1 zusammengestellt.

**Tabelle 1**

| Gegenüberstellung der Testergebnisse aus den Anwendungsversuchen | | | | | |
|---|---|---|---|---|---|
| Probe | Manueller Stahlwolle-Test (60 Kratzzyklen) | Ritzhärte nach DIN 53 799 | | Haze nach DIN 52 347²⁾ und ASTM D-1044²⁾ | |
| | | Diamant | Hartmetallkugel¹⁾ | 100 U | 500 U |
| Beispiel 1 (PTMO, Aerosil 200) | sehr gut | 2,5 N | 9,0 N | 0,75 % | 3,13 % |
| Beispiel 2 (PTMO, Aerosil TT 600) | sehr gut | 3,0 N | 10,0 N | 4,93 % | 21,13 % |
| Beispiel 3 (PTEO, Aerosil 90) | sehr gut | 2,5 N | 9,0 N | 1,56 % | 5,42 % |
| Beispiel 4 (MTMS, Aluminiumoxid C) | mäßig | 1,75 N | 6,5 N | 6,23 % | 27,56 % |
| PVC-Platte | schlecht | 0,5 N | 4,0 N | 101,2 % | 127,5 % |
| Vgl.-Bsp. D (Sartomer 494) | schlecht | 1,0 N | 6,0 N | 20,3 % | 61,4 % |
| Vgl.-Bsp. C (MEMO, Aerosil 200) | - | 2,0 N | 8,5 N | 4,9 % | 8,6 % |
| Vgl.-Bsp. B (VTEO, Aerosil 200) | - | 2,0 N | 8,5 N | 3,5 % | 7,9 % |
| Vgl.-Bsp. A (VTMO, Aerosil 200) | - | 2,5 N | 9,0 N | 2,9 % | 6,4 % |

| | | | | | |
|---|---|---|---|---|---|
| ¹⁾ Durchmesser 1 mm ²⁾ Bestimmung der Abriebfestigkeit durch Lichtstreuungsmessung (Haze) nach 100 bzw. 500 Taber-Umdrehungen, 2 Reibräder CS-10, F = 5,5 ± 0,2 N, 3 Einzelmessungen, arithmetisches Mittel | | | | | |

## Patentansprüche

1. Verfahren zur Herstellung von siliciumorganischen Nanokapseln oder einer siliciumorganische Nanokapseln enthaltenden Zusammensetzung, indem man
(i) mindestens ein nanoskaliges Oxid und/oder Mischoxid mindestens eines Metalls oder Halbmetalls der dritten bis sechsten Hauptgruppe, der ersten bis achten Nebengruppe des Periodensystems der Elemente oder der Lanthanide
mit
(ii) mindestens einem Alkyltrialkoxysilan der allgemeinen Formel (II)
(Z)₃Si-R (II),
worin die Gruppen Z gleich oder verschieden sind und Hydroxy-und/oder Alkoxy-Reste darstellen und
worin R für eine lineare, verzweigte, cyclische oder substituierte Alkylgruppe mit 1 bis 50 C-Atomen steht,
und
(iii) gegebenenfalls einem monomeren und/oder oligomeren Kieselsäureester, der Methoxy-, Ethoxy-, n- Propoxy- oder i-Propoxygruppen trägt und einen mittleren Oligomerisierungsgrad von 1 bis 50 aufweist,
und
(iv) gegebenenfalls einem organofunktionellen Siloxan, dessen Funktionalitäten gleich oder verschieden sind und jedes Si-Atom im Siloxan eine Funktionalität aus der Reihe n-, i-, cyclo-Alkyl, Fluoralkyl, Chloralkyl, Bromalkyl, Jodalkyl, Alkoxyalkyl, Mercaptoalkyl oder Aminoalkyl trägt und die verbleibenden freien Valenzen der Si-Atome im Siloxan durch Methoxy- oder Ethoxy- oder Hydroxy-Gruppen gesättigt sind,
und
(v) gegebenenfalls einem weiteren organofunktionellen Silan aus der Reihe Aminoalkylalkoxysilan, Mercaptoalkylalkoxysilan, Epoxyalkoxysilan Alkoxyalkylalkoxysilan,Fluoralkylalkoxysilan, Chloralkylalkoxysilan, Bromalkylalkoxysilan oder Jodalkylalkoxysilan,
in situ in einem flüssigen, härtbaren Kunstharz oder einer Vorläuferstufe eines härtbaren Kunstharzes umsetzt,
wobei man
- das härtbare Kunstharz oder eine Vorläuferstufe eines härtbaren Kunstharzes vorlegt und erwärmt,
- definierte Mengen Wasser, gegebenenfalls Katalysator und gegebenenfalls Netzmittel zugibt,
- Komponenten (ii) bis (v) einbringt und anschließend
- Komponente (i) unter guter Durchmischung zusetzt.

2. Verfahren nach Anspruch 1,
**dadurch gekennzeichnet,**
**dass** man ein nanoskaliges Oxid und/oder Mischoxid (KA-O) mit einem durchschnittlichen Partikeldurchmesser von 1 bis 100 nm einsetzt.

3. Verfahren nach Anspruch 1 oder 2,
**dadurch gekennzeichnet,**
**dass** man als härtbares Kunstharz oder Vorläuferstufe eines härtbaren Kunstharzes ein Acrylat, Methacrylat, Epoxid, Epoxidharz, Polyurethan, Polyurethanharz, ungesättigte Polyester, ungesättigtes Polyesterharz, Epoxyacrylat, Polyesteracrylat, Urethanacrylat, Siliconacrylate oder Gemische aus zwei oder mehreren der zuvor genannten Komponenten verwendet.

4. Verfahren nach einem der Ansprüche 1 bis 3,
**dadurch gekennzeichnet,**
**dass** man 0,1 bis 60 Gew.-% nanoskaliges Oxid und/oder Mischoxid (KA-O), bezogen auf das Kunstharz, einsetzt.

5. Verfahren nach einem der Ansprüche 1 bis 4,
**dadurch gekennzeichnet,**
**dass** man die oxidische Komponente (i) und mindestens eine silanbasierende Komponente (ii), (iii), (iv) und/oder (v) in einem Gewichtsverhältnis von 4 : 1 bis 1 : 1 einsetzt.

6. Verfahren nach einem der Ansprüche 1 bis 5,
**dadurch gekennzeichnet,**
**dass** man als siliciumorganische Komponente (ii) Methyltrimethoxysilan, Methyltriethoxysilan, Ethyltrimethoxysilan, Ethyltriethoxysilan, n-Propyltrimethoxysilan, n-Propyltriethoxysilan, i-Propyltrimethoxysilan oder i-Propyltriethoxysilan einsetzt.

7. Verfahren nach einem der Ansprüche 1 bis 6,
**dadurch gekennzeichnet,**
**dass** man die Umsetzung in Gegenwart eines Katalysators durchführt.

8. Verfahren nach einem der Ansprüche 1 bis 7,
**dadurch gekennzeichnet,**
**dass** man pro Mol Si der siliciumorganischen Komponenten (ii) bis (v) 0,5 bis 6 Mol Wasser einsetzt.

9. Verfahren nach einem der Ansprüche 1 bis 8,
**dadurch gekennzeichnet,**
**dass** man die Umsetzung in Gegenwart eines Netzmittels durchführt.

10. Verfahren nach einem der Ansprüche 1 bis 9,
**dadurch gekennzeichnet,**
**dass** man die Umsetzung bei einer Temperatur im Bereich von 30 bis 100 °C durchführt.

11. Verfahren nach einem der Ansprüche 1 bis 10,
**dadurch gekennzeichnet,**
**dass** man während der Umsetzung und/oder danach den entstandenen Alkohol aus dem Reaktionssystem entfernt.

12. Siliciumorganische Nanokapseln erhältlich nach einem der Ansprüche 1 bis 11.

13. Siliciumorganische Nanokapseln nach Anspruch 12,
**dadurch gekennzeichnet,**
**dass** die Gruppe R eine Methyl-, Ethyl-, n-Propyl-, i-Propyl-, n-Butyl-, i-Butyl-, sec.-Butyl, t-Butyl-, n-Hexyl-, n-Octyl-, i-Octyl-, n-Dodecyl-, n-Hexadecyl- oder eine n-Octadecyl-Gruppe darstellt.

14. Siliciumorganische Nanokapseln nach Anspruch 12,
**dadurch gekennzeichnet,**
**dass** eine substituierte Alkylgruppe R eine Fluoralkylgruppe der allgemeinen Formel CF₃(CF₂)_{y}(CH₂CH₂)_{z} ist, worin y eine Zahl von 0 bis 10 und z gleich 0 oder 1 sind.

15. Siliciumorganische Nanokapseln nach einem der Ansprüche 12 bis 14,
**dadurch gekennzeichnet,**
**dass** der Alkoxy-Rest (Z) eine Methoxy-, Ethoxy-, n-Propoxy- oder i-Propoxy-Gruppe ist.

16. Siliciumorganische Nanokapseln nach einem der Ansprüche 12 bis 15,
**dadurch gekennzeichnet,**
**dass** der Kern A ein Oxid und/oder Mischoxid (KA-O) aus der Reihe der Elemente Si, Al, Ti und/oder Zr darstellt.

17. Siliciumorganische Nanokapseln nach einem der Ansprüche 12 bis 16,
**gekennzeichnet durch**
einen mittleren Durchmesser der Kapseln von 10 bis 400 nm.

18. Zusammensetzung auf der Basis eines aushärtbaren Kunstharzes oder auf der Basis einer Vorläuferstufe eines härtbaren Kunstharzes, die siliciumorganische Nanokapseln enthält, erhältlich nach einem der Ansprüche 1 bis 17.

19. Verwendung einer Zusammensetzung nach Anspruch 18 als Lack oder als Basis für die Herstellung einer Beschichtungszusammensetzung oder eines Lacks.

20. Verwendung einer Zusammensetzung nach Anspruch 18 für die Erzeugung einer kratzfesten Beschichtung.

21. Verfahren zur Herstellung einer kratzfesten Beschichtung,
**dadurch gekennzeichnet,**
**dass** man eine Zusammensetzung oder einen Lack nach Anspruch 18 auf ein Substrat aufbringt und photochemisch aushärtet.

22. Verfahren nach Anspruch 21,
**dadurch gekennzeichnet,**
**dass** man zum Aushärten der Zusammensetzung oder des Lacks UV- oder Elektronenstrahlen einsetzt.

23. Kratzfeste Beschichtung, erhältlich durch Aufbringen einer Zusammensetzung nach mindestens einem der Ansprüche 18 bis 22.

24. Artikel mit einer kratzfesten Beschichtung erhältlich nach Anspruch 23.

## Claims

1. Process for preparing organosilicon nanocapsules, or a composition comprising organosilicon nanocapsules, by reacting
(i) at least one nanoscale oxide and/or mixed oxide of at least one metal or semimetal from main groups three to six or transition groups one to eight of the Periodic Table of the Elements, or of the lanthanides,
with
(ii) at least one alkyltrialkoxysilane of the general formula (II)
(Z)₃Si-R (II)
in which the groups Z are identical or different and are hydroxyl and/or alkoxy radicals and in which R is a linear, branched, cyclic or substituted alkyl group having from 1 to 50 carbon atoms,
and
(iii) if desired, a monomeric and/or oligomeric silicic ester which carries methoxy, ethoxy, n-propoxy or i-propoxy groups and has an average degree of oligomerization of from 1 to 50,
and
(iv) if desired, an organofunctional siloxane whose functionalities are identical or different and in which each silicon atom carries a functionality from the group consisting of n-, i-, cycloalkyl, fluoroalkyl, chloroalkyl, bromoalkyl, iodoalkyl, alkoxyalkyl, mercaptoalkyl and aminoalkyl, and the remaining free valences of the silicon atoms in the siloxane are satisfied by methoxy or ethoxy or hydroxyl groups,
and
(v) if desired, a further organofunctional silane from the group consisting of amino-alkylalkoxysilane, mercaptoalkylalkoxysilane, epoxyalkoxysilane, alkoxyalkylalkoxysilane, fluoroalkylalkoxysilane, chloroalkylalkoxy-silane, bromoalkylalkoxysilane and iodo-alkylalkoxysilane,
in situ in a liquid, curable synthetic resin or a precursor of a curable synthetic resin,
wherein
- the curable synthetic resin or a precursor of a curable synthetic resin is introduced heated,
- defined amounts of water, catalyst, if desired, and wetting agent, if desired, are added,
- components (ii) to (v) are introduced, and then
- component (i) is added with thorough mixing.

2. Process according to Claim 1, **characterized in that** a nanoscale oxide and/or mixed oxide (KA-O) having an average particle diameter of from 1 to 100 nm is used.

3. Process according to Claim 1 or 2, **characterized in that** the curable synthetic resin or precursor of a curable synthetic resin used comprises an acrylate, methacrylate, epoxide, epoxy resin, polyurethane, polyurethane resin, unsaturated polyesters, unsaturated polyester resin, epoxy acrylate, polyester acrylate, urethane acrylate, silicone acrylates or mixtures of two or more of the aforementioned components.

4. Process according to any of Claims 1 to 3,
**characterized in that** from 0.1 to 60% by weight of nanoscale oxide and/or mixed oxide (KA-O) is used, based on the synthetic resin.

5. Process according to any of Claims 1 to 4,
**characterized in that** the oxide component (i) and at least one silane-base component (ii), (iii), (iv) and/or (v) are employed in a weight ratio of from 4:1 to 1:1.

6. Process according to any of Claims 1 to 5,
**characterized in that** methyltrimethoxysilane, methyltriethoxysilane, ethyltrimethoxysilane, ethyltriethoxysilane, n-propyltrimethoxysilane, n-propyltriethoxysilane, i-propyltrimethoxysilane or i-propyltriethoxysilane is used as organosilicon component (ii).

7. Process according to any of Claims 1 to 6,
**characterized in that** the reaction is conducted in the presence of a catalyst.

8. Process according to any of Claims 1 to 7,
**characterized in that** from 0.5 to 6 mol of water is used per mole of Si of the organosilicon components (ii) to (v).

9. Process according to any of Claims 1 to 8,
**characterized in that** the reaction is conducted in the presence of a wetting agent.

10. Process according to any of Claims 1 to 9,
**characterized in that** the reaction is conducted at a temperature in the range from 30 to 100°C.

11. Process according to any of Claims 1 to 10,
**characterized in that** the resulting alcohol is removed from the reaction system during the reaction and/or thereafter.

12. Organosilicon nanocapsules obtainable according to any of Claims 1 to 11.

13. Organosilicon nanocapsules according to Claim 12, **characterized in that** the group R represents a methyl, ethyl, n-propyl, i-propyl, n-butyl, i-butyl, sec-butyl, t-butyl, n-hexyl, n-octyl, i-octyl, n-dodecyl, n-hexadecyl or n-octadecyl group.

14. Organosilicon nanocapsules according to Claim 12, **characterized in that** a substituted alkyl group R is a fluoroalkyl group of the general formula CF₃(CF₂)_{Y}(CH₂CH₂)_{z} in which y is a number from 0 to 10 and z is 0 or 1.

15. Organosilicon nanocapsules according to any of Claims 12 to 14, **characterized in that** the alkoxy radical (Z) is a methoxy, ethoxy, n-propoxy or i-propoxy group.

16. Organosilicon nanocapsules according to any of Claims 12 to 15, **characterized in that** the core A is an oxide and/or mixed oxide (KA-O) of an element from the group consisting of Si, Al, Ti and/or Zr.

17. Organosilicon nanocapsules according to any of Claims 12 to 16, **characterized by** an average diameter of the capsules of from 10 to 400 nm.

18. Composition based on a curable synthetic resin, or on a precursor of a curable synthetic resin, comprising organosilicon nanocapsules, obtainable according to any of Claims 1 to 17.

19. Use of a composition according to Claim 18 as a coating material or as a basis for the preparation of a coating composition or coating material.

20. Use of a composition according to Claim 18 for producing a scratch-resistant coating.

21. Process for producing a scratch-resistant coating, **characterized in that** a composition or a coating material according to Claim 18 is applied to a substrate and subjected to photochemical curing.

22. Process according to Claim 21, **characterized in that** UV radiation or electron beams are used to cure the composition or the coating material.

23. Scratch-resistant coating obtainable by applying a composition according to at least one of Claims 18 to 22.

24. Article with a scratch-resistant coating, obtainable according to Claim 23.

## Revendications

1. Procédé pour la préparation de nanocapsules organosiliciées ou d'une composition contenant des nanocapsules organosiliciées, où on transforme
(i) au moins un oxyde et/ou oxyde mixte d'une taille à l'échelle du nanomètre d'au moins un métal ou d'un semi-métal du troisième au sixième groupe principal, du premier au huitième groupe secondaire du système périodique des éléments ou des lanthanides
avec
(ii) au moins un alkyltrialcoxysilane de formule générale (II)
(Z)₃Si-R (II),
où les groupes Z sont identiques ou différents et représentent des radicaux hydroxy et/ou alcoxy et où R représente un groupe alkyle linéaire, ramifié, cyclique ou substitué, comprenant 1 à 50 atomes de carbone,
et
(iii) le cas échéant un ester de silice monomère et/ou oligomère qui porte des groupes méthoxy, éthoxy, n-propoxy ou i-propoxy et qui présente un degré d'oligomérisation moyen de 1 à 50,
et
(iv) le cas échéant un siloxane organofonctionnel, dont les fonctionnalités sont identiques ou différentes et chaque atome de Si dans le siloxane porte une fonctionnalité de la série n-alkyle, i-alkyle, cycloalkyle, fluoroalkyle, chloroalkyle, bromoalkyle, iodoalkyle, alcoxyalkyle, mercaptoalkyle, ou aminoalkyle et les valences libres résiduelles des atomes de Si dans le siloxane sont saturées par des groupes méthoxy ou éthoxy ou hydroxy,
et
(v) le cas échéant un autre silane organofonctionnel de la série aminoalkylalcoxysilane, mercaptoalkylalcoxysilane, époxyalcoxysilane, alcoxyalkylalcoxysilane, fluoroalkylalcoxysilane, chloroalkylalcoxysilane, bromoalkylalcoxysilane ou iodoalkylalcoxysilane,
in situ dans une résine synthétique liquide, durcissable ou un précurseur d'une résine synthétique durcissable, où
- on dispose au préalable et on chauffe la résine synthétique durcissable ou un précurseur d'une résine synthétique durcissable,
- on ajoute des quantités définies d'eau, le cas échéant un catalyseur et le cas échéant un mouillant,
- on introduit les composants (ii) à (v), puis
- on ajoute le composant (i) en mélangeant intensivement.

2. Procédé selon la revendication 1, **caractérisé en ce qu'**on utilise un oxyde et/ou un oxyde mixte d'une taille à l'échelle du nanomètre (KA-O) présentant un diamètre moyen des particules de 1 à 100 nm.

3. Procédé selon la revendication 1 ou 2,
**caractérisé en ce qu'**on utilise comme résine synthétique durcissable ou précurseur d'une résine synthétique durcissable, un acrylate, un méthacrylate, un époxyde, une résine époxyde, un polyuréthane, une résine polyuréthane, un polyester insaturé, une résine polyester insaturée, un époxyacrylate, un polyesteracrylate, un acrylate d'uréthane, un acrylate de silicone ou des mélanges de deux des composés susmentionnés ou plus.

4. Procédé selon l'une quelconque des revendications 1 à 3, **caractérisé en ce qu'**on utilise 0,1 à 60% en poids d'oxyde et/ou d'oxyde mixte d'une taille à l'échelle du nanomètre (KA-O), par rapport à la résine synthétique.

5. Procédé selon l'une quelconque des revendications 1 à 4, **caractérisé en ce qu'**on utilise le composant oxyde (i) et au moins un composant à base de silane (ii), (iii), (iv) et/ou (v) dans un rapport pondéral de 4:1 à 1:1.

6. Procédé selon l'une quelconque des revendications 1 à 5, **caractérisé en ce qu'**on utilise comme composant organosilicié (ii) le méthyltriméthoxysilane, le méthyltriéthoxysilane, l'éthyltriméthoxysilane, l'éthyltriéthoxysilane, le n-propyltriméthoxysilane, le n-propyltriéthoxysilane, l'i-propyltriméthoxysilane ou l'i-propyltriéthoxysilane.

7. Procédé selon l'une quelconque des revendications 1 à 6, **caractérisé en ce qu'**on réalise la transformation en présence d'un catalyseur.

8. Procédé selon l'une quelconque des revendications 1 à 7, **caractérisé en ce qu'**on utilise par mole de Si des composants organosiliciés (ii) à (v) 0,5 à 6 moles d'eau.

9. Procédé selon l'une quelconque des revendications 1 à 8, **caractérisé en ce qu'**on réalise la transformation en présence d'un mouillant.

10. Procédé selon l'une quelconque des revendications 1 à 9, **caractérisé en ce qu'**on réalise la transformation à une température dans la plage de 30 à 100°C.

11. Procédé selon l'une quelconque des revendications 1 à 10, **caractérisé en ce qu'**on élimine, pendant la transformation et/ou après, l'alcool formé du système de réaction.

12. Nanocapsules organosiliciées pouvant être obtenues selon l'une quelconque des revendications 1 à 11.

13. Nanocapsules organosiliciées selon la revendication 12, **caractérisées en ce que** le groupe R représente un groupe méthyle, éthyle, n-propyle, i-propyle, n-butyle, i-butyle, sec-butyle, t-butyle, n-hexyle, n-octyle, i-octyle, n-dodécyle, n-hexadécyle ou n-octadécyle.

14. Nanocapsules organosiliciées selon la revendication 12, **caractérisées en ce qu'**un groupe alkyle substitué R est un groupe fluoroalkyle de formule générale CF₃(CF₂)y(CH₂CH₂)_{z}, où y représente un nombre de 0 à 10 et z vaut 0 ou 1.

15. Nanocapsules organosiliciées selon l'une quelconque des revendications 12 à 14, **caractérisées en ce que** le radical alcoxy (Z) représente un groupe méthoxy, éthoxy, n-propoxy ou i-propoxy.

16. Nanocapsules organosiliciées selon l'une quelconque des revendications 12 à 15, **caractérisées en ce que** le noyau A représente un oxyde et/ou un oxyde mixte (KA-O) de la série des éléments Si, Al, Ti et/ou Zr.

17. Nanocapsules organosiliciées selon l'une quelconque des revendications 12 à 16, **caractérisées par** un diamètre moyen des capsules de 10 à 400 nm.

18. Composition à base d'une résine synthétique durcissable ou à base d'un précurseur d'une résine synthétique durcissable, qui contient les nanocapsules organosiliciées, pouvant être obtenues selon l'une quelconque des revendications 1 à 17.

19. Utilisation d'une composition selon la revendication 18 comme laque ou comme base pour la préparation d'une composition de revêtement ou d'une laque.

20. Utilisation d'une composition selon la revendication 18 pour la production d'un revêtement résistant aux griffes.

21. Procédé pour la préparation d'un revêtement résistant aux griffes, **caractérisé en ce qu'**on applique une composition ou une laque selon la revendication 18 sur un substrat et on la durcit par voie photochimique.

22. Procédé selon la revendication 21, **caractérisé en ce qu'**on utilise, pour le durcissement de la composition ou de la laque, des rayons UV ou électroniques.

23. Revêtement résistant aux griffes, pouvant être obtenu par application d'une composition selon au moins l'une quelconque des revendications 18 à 22.

24. Objet présentant un revêtement résistant aux griffes pouvant être obtenu selon la revendication 23.
